# EUROPEAN PATENT APPLICATION

(11) **EP 1 163 846 A2**
(43) Date of publication of application: **19.12.2001**
(21) Application number: 01500134.0
(22) Date of filing: 28.05.2001
(51) Int. Cl.: A01M 1/00, A01M 1/20, F42B 12/50

(54) **Improvements to insecticide projectiles**

(30) Priority: 30.05.2000 ES 200001364
(71) Applicant: Rejat Rodriguez, Luis Angel, 08912 Badalona (Barcelona) (ES)
(72) Inventor: Rejat Rodriguez, Luis Angel, 08912 Badalona (Barcelona) (ES)
(74) Representative: Duran Moya, Luis-Alfonso

(57) **Abstract**

The improvements apply to insecticidal projectiles of the type comprising a pellet body which has a charge of insecticide in its front portion and consist in that the insecticide is contained inside a capsule with walls that can be broken easily upon impact, to prevent evaporation of the insecticidal substance.

## Description

The present invention is intended to disclose improvements to pellets for the application of insecticide, contributing appreciable characteristics of novelty and inventive activity.

Pellets for the application of insecticide are known from the Applicant's current patent of invention No. 9702593 which discloses a method of controlling processionary moths and other pests by the firing of pellets carrying a toxic charge towards the individual nests of the insects to be eliminated which, in the specific case considered in the invention, are the caterpillars of the so-called "processionary pine moth".

In patent of invention 9702593, the charge of insecticidal material constituted a mass which was added to the front portion of the pellet.

The object of the present invention is to disclose a pellet for insecticidal use in which the charge is included in the front portion of a conventional pellet with a flat head, the insecticidal material being held inside a front capsule.

This structure facilitates the handling of the pellet carrying the insecticidal substance, preventing undesired contamination of any kind.

For a better understanding, a drawing is appended by way of non-limiting example, and represents a partially-sectioned side elevational view of a pellet for the application of insecticide which incorporates the present improvements.

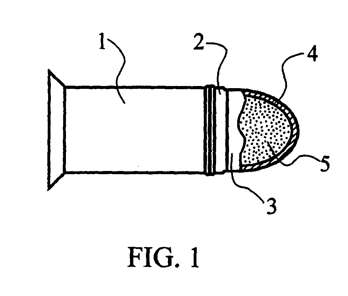

As shown in the drawing, the pellet which incorporates the present improvements comprises an enveloping casing 1 of plastics material covering a zinc core which is enlarged in its front portion 2, forming a flat head on which an enveloping capsule 3, carrying the insecticide charge and preventing evaporation thereof, is fitted. The capsule 3 will comprise an envelope 4, preferably of synthetic material with walls that can be broken easily upon impact, and the internal charge 5 of insecticidal material which is to be introduced into the processionary-moth caterpillars' nest after firing.

The charge of insecticidal material will preferably be constituted by about 10 milligrams of an insecticidal preparation, for example, deltametrin.

According to the present invention, the insecticidal pellets are in the form of units inside small disposable polyethylene tubes provided with pleated bellows at their rear ends. The insecticidal pellet is inserted in the loading end of an air rifle by placing the mouth of the tube over the loading orifice of the weapon and pressing the bellows at its rear end. The pellet can be fired sufficiently accurately for its penetration hole to be within a diameter equivalent to 2/3 of the total diameter of the nest.

The insecticidal pellet has the body of a flat-headed pellet having, on its front surface or impact zone, 0.1 mg of deltametrin contained in a capsule. The body of the pellet passes completely through the nests unless it encounters branches big enough to stop it, on its trajectory; a suitable inclination must therefore be imparted to the shot so that the pellet does not escape freely with the risk of causing damage upon passing through the nest or owing to lack of skill in aiming, and this is achieved by aiming at the tops of the trees or thick branches, behind the nest selected.

The time when insecticidal pellets can be used effectively against the processionary pine moth varies, in dependence on the particular climate of the location, from the long period between the months of November and April in cold localities, reducing to the few cold days of winter, generally the first fortnight of January, in warmer localities. In all cases, they can be used effectively during the day, throughout the whole period between the appearance of the first nests and the start of the pupation processions of the caterpillars, provided that the ambient temperature is below 10°C. The caterpillars are thus grouped in the nests whereas, in the evening or at higher temperatures, they usually leave them.

Given that the anti-processionary-moth pellets contain the minimum necessary dose of insecticide, and that the sensitivity of the caterpillars thereto decreases throughout their development, it is preferable to perform the application as soon as possible, the application of two insecticidal pellets being advantageous for the treatment of large nests.

When the application has been performed well, the insecticidal pellet gives rise to the dispersal and death of a large proportion of the caterpillars of the nest, within a surrounding radius of about 20 cm, during the first 48 hours, which enables the result of the treatment to be ascertained. The rest of the caterpillars perish over a longer period extending up to 10 or even 15 days in applications performed towards the end of the season with a small dose, or due to the nest having been reached by the shot very laterally, or to the treatment of large nests with a single insecticidal pellet.

The characteristics and composition of the insecticidal preparation are preferably:
A greenish-yellow, slightly translucent mass of soft consistency which melts at about 45°C to give a clear liquid of characteristic odour.

| | | |
|---|---|---|
| Composition: | DECIS EC 2.5 (AgreVo) | 55% w/w |
| | Paraffin (Panreac) | 40% w/w |
| | Colophony | 5% w/w |

The capsule will comprise a film of about 10 microns thickness adhering to the head of the pellet.

| | | |
|---|---|---|
| Composition: | Gum arabic | 44% w/w |
| | Gelatine | 27.9% w/w |
| | Glycerine | 27.9% w/w |
| | Phenol | 0.2% w/w |

## Claims

1. Improvements in insecticidal projectiles of the type comprising a pellet body which has a charge of insecticide in its front portion, **characterized in that** the insecticide is contained inside a capsule with walls that can be broken easily upon impact, to prevent evaporation of the insecticidal substance.

2. Improvements in insecticidal projectiles according to Claim 1, **characterized in that** the capsule which contains the insecticidal substance is composed of a film of about 10 microns thickness adhering to the head of the pellet.

3. Improvements in insecticidal projectiles according to Claim 1, **characterized in that** the insecticidal material is constituted by deltametrin.
